# EUROPEAN PATENT APPLICATION

(11) **EP 3 540 668 A1**
(43) Date of publication of application: **18.09.2019**
(21) Application number: 18162175.6
(22) Date of filing: 16.03.2018
(51) Int. Cl.: G06Q 10/10, H04M 3/42

(54) **METHODS AND SYSTEMS FOR MANAGING INCOMING COMMUNICATIONS**

(71) Applicant: Dahan, Meir, 1794000 Adi (IL); Antopolsky, Eliahu, Zichron Yakov 3092088 (IL)
(72) Inventor: Dahan, Meir, 1794000 Adi (IL); Antopolsky, Eliahu, Zichron Yakov 3092088 (IL)
(74) Representative: Kretschmann, Dennis

(57) **Abstract**

A method that enables a callee or a recipient to manage incoming voice calls and text messages in a way that in a period of time that he sets the method prevents the operation of the alerts mechanisms of his mobile device. In case of an incoming voice call or a text message the method sends a notice to the caller or sender mobile device notifying that the callee or recipient prefers to receive now only urgent voice calls and text messages. The method enables the caller or the sender to decide according to his sole discretion whether to complete this voice call or this text message.

## Description

### TECHNICAL FIELD

The present invention refers generally to systems and methods that may be performed by a processor running on communication devices, servers or computers of communication service providers, which enables users to manage incoming communications such as voice calls and text messages.

### BACKGROUND ART

Many users of communication devices, such as mobile and phone devices, that are designed to receive voice calls are in dilemma whether to put their communication device on mute mode when they are in places and situations that it is customary to put the communication device on mute mode, such as a meeting, trying to take a nap or in a movie, while at the same time they prefer not to miss important and emergency incoming communications such as voice calls. The dilemma of almost every average user is whether to leave the communication device on the regular mode on these specific times and to receive unimportant incoming voice calls, which are disturbing at that time, or to put it on mute and to miss important and emergency voice calls, The present invention offers a good and effective response to this dilemma.

Many users have on their communication devices messaging applications that are designed to send and receive messages, that may include text messages, icons, photos, video and media files and the like (hereinafter "text messages"). Famous messaging applications are for example the standard cellular text messages applications and also the over internet applications such as WhtasApp, Viber, Line, Facebook Messenger, Skype, Facebook and the like,

In many cases the incoming messages distract the users' mind when they are focusing in their activities, such as, driving, reading, writing, wondering, talking, cooking, working and the like. Many scientific studies have measured the harmful effects of frequent distractions when a person is preoccupied with doing something else or even at rest. For example, those studies show that such frequent distractions reduce a person's efficiency by about 20 IQ points and also harm his well-being and happiness.

Regardless such harmful effects of frequent distractions it may be understood that many users wish to handle in real time only urgent important text messages and to handle all other text messages at a certain time convenient for them.

Many users of communication devices that are designed to receive text messages are in dilemma whether to put their mobile device on mute mode when they are in places and situations that it is customary to put the communication device on mute mode while at the same time they prefer not to miss important and emergency incoming text messages. The dilemma of almost every average user is whether to leave the communication device on the regular mode on these specific times and to receive unimportant incoming text messages, which are disturbing at that time, or to put it on mute and to miss important and emergency text messages. Many people hold the opinion that text messages should be answered as quickly as incoming calls, as opposed to e-mails for example, and the present invention provides a solution to this problem as well. An incoming text message make a triple trouble when it arrives at such times when the user wishes not to be disturbed: first, the notification of the incoming text messages disturbs the user in that times; Second, the notification itself followed by temptation of the user just to check briefly who sends the message and to find out its urgent importance; and Third, the user is likely to think that ignoring now the message is a dishonorable act to the sender, who may be offended. The present invention offers a good and effective response to this dilemma.

### DESCRIPTION OF THE DRAWINGS

The intention of the drawings attached to the application is not to limit the scope of the invention and its application. The drawings are intended only to illustrate the invention and they constitute only one of its many possible implementations.
FIG. 1 is a block diagram that shows two communication devices (200) that one of them is the callee or recipient communication device (1) and the second one is the caller or sender communication device (2). The dotted lines between the server (100) and the communication devices (200) refer to internet communication and the dotted line between these two communication devices (1) and (2) refer to a cellular communication in case of a cellular communication.
FIG. 2 is a block diagram that shows two communication devices (200) that one of them is the communication device (11) and the second one is the another communication device (22).
FIG. 3 is a block diagram that shows the computer (500) of the communication service provider, the communication device (520) and the another communication device (510).

### THE INVENTION

The present invention relates to systems and methods for managing incoming communications such as voice call and text messages and for the sake of fluency we use the term "incoming communication" in the claims and also in the specification as means to incoming voice calls or incoming text messages or both. In this application the term "recipient" means a recipient of a text message or a callee of a voice call; and the term "caller" means a caller of a voice call or a sender of the text message.

### The method for managing incoming communication such as voice calls:

This chapter is relevant to the method in regards to communications of voice calls and also of text messages. For the sake of fluency we will start with some definitions. The terms hereinafter have the meanings as stated beside each of them in this patent application and in the claims as well. These terms may be used in the application and the claims in plural or singular.

The term **"communication device"** refers to any kind of device which is designed to receive voice calls or text messages, by cellular networks or over the internet, such as smartphones, mobile devices, tablet computers, wearable computers, etc.;
The term **"voice call"** refers to phone calls which may be executed also over cellular networks and calls over the internet by smartphone applications such as Viber, WhatsApp, FaceTime, Skype, Messenger and the like.
The term **"caller"** refers to a person who performs a voice call by a communication device and the term "**callee**" refers to a person who receives a voice call to his communication device or that someone calls to his user number that may be for example his phone number.

The term **"user"** refers to a user and also to a callee when this user receives a voice call to his communication device or when someone calls to his user number, or to a caller when this user performs a phone call by his communication device.
The term **"caller communication device"** s also refers to the communication device that performs an outgoing communication;
The term **"callee communication device"** is also refers to the communication device that receives an incoming voice call;
The term **"processing device"** refers to a processing device on a server, on a communication device, on the computers of communication service providers, or on part or all of them. The processing device may include computing device;
The term **"alerts mechanisms"** refers also to the ringing, vibrating and screen display mechanisms of communication devices, which usually are activated as a result of incoming communications.

The main object of the present patent application is to provide a method performed by processing devices (10) that enables users of communication devices to manage incoming communications such as voice calls. A smartphone application may be used as a framework for the overall operation of the method and for the sake of fluency we will use the terms "smartphone application" and "method" hereinafter in this connection and as having in general the same meanings. Users of communication devices can download the smartphone application to their communication devices. The smartphone application performs the method on the processing devices (10), which may be processing devices in the communication devices, in servers (100) or on both.

The method performed by processing devices (10) running on communication devices (200) and the server (100). The users of the communication devices (200) may perform a communication such as a voice call and in these cases these users are callers and their communication devices are callers communication devices (2), or may receive a communication such as a voice call and in these cases these users are callee and their communication devices are callee communication devices (1).

The method may include one or more of the following features:
(a) Enabling the user to activate the method regarding his communication device for a period of time that this user sets. In this case we may refer to this user as a callee and to his communication device as a callee mobile device (1). The method enables the callee to manage incoming communications such as incoming voice calls to his callee mobile device (1) in a way that incoming communication will not activate the alerts mechanisms of his communication device but only after a decision of the caller that the voice call is urgent, a decision that based on the sole discretion of the caller.
(b) In response to the activation of the method on the callee communication device (1), the method prevents the operation of the alerts mechanisms (3) of the callee communication device (1) during this period of time that the callee sets.
(c) In response to the activation of the method regarding the callee communication device (1), the method sends to the server (100), possible via internet or cellular network, the information regarding the user number of the callee mobile device (1) and regarding the period of time that he sets. The term "user number" means for example the phone number of the callee mobile device or any user number that serves as identification address in cases of messengers, Skype and that kind of relevant calling and communication programs and communication service providers.
(d) Storing in the server the information regarding the user number of the callee communication device and listing for said period of time this user number as a user number on an urgent mode.
(e) in response to execution of incoming communication such as incoming voice call from the caller communication device to another user number, such as a specific targeted user number, the method sends via internet or via cellular network from the caller communication device (2) to the server (100) the information regarding the another user number. The term "another user number" means for example the phone number of the callee mobile device or any identification address in cases of messengers, Skype and that kind of relevant calling and communication programs and communication providers.
(f) Checking in the server whether said another user number is listed in the server as a user number on an urgent mode.
(g) In response to a positive result of this checking, the method sends a notice to the caller communication device that includes notification that the callee prefers to receive now only urgent incoming communication.
(h) Enabling the caller of the communication whether to complete the communication according to his sole discretion.
(i) In response to such decision to complete the communication, the method sends command from the server to the callee communication device (1) for enabling the operation of the alerts mechanisms (3) of the callee communication device (1) and by that enabling the callee to be aware to the incoming communication.

The method also may include the following feature: When the caller communication device does not include the method, then when this caller performs a communication to the callee, the method sends to the caller communication device a message that the callee using this method and recommends the caller to download it for enabling him to complete the communication, a future communication and also for his own use.

The term "completed" in this connection and also in the claims also means that the alerts mechanisms (3) of the callee communication device (1) will operate in response to incoming communication, basically in the normal way when the method is on no-active mode, for example, ringing, vibrating and activating the screen with light and information regarding the incoming communication.

The notice informs the caller that the callee prefers to receive now only urgent communication and this notice may include the time period that the callee sets. As explained above, the method enables the caller to complete the communication according to his own discretion, assuming that he will act according the notice, and to calculates the urgency of his call with comparison to the possible content of the notice, for example, a phone call can be urgent if the callee just want to drink his coffee quietly but not urgent if he is now praying in the church. For completing the voice call the method may enables the caller to complete the voice call by pressing on a specific button, on the screen or on the keyboard of his communication device, to say a specific word and any other way that users activates features by their communication devices.

The method may provide the users with an option to select the notice out of several optional notices. The method may also provide the users an option to compose a notice. The notice may include the time period in which the callee prefers to receive only voice calls in specific matters.

The method enables the callee to define times in which he wishes to receive only urgent voice calls. The method also may include the option to define geographical locations in which the callee will receive only urgent voice calls, by using the GPS features and the map programs of the mobile device. The callee may set the method that it will be activated automatically anytime he is in a certain territory, for example, in the school yard of his children, in the park, in the sport club, the church and other places in which the callee prefer to be in a rest from not-urgent voice calls. The term "a period of time" in the claims also refers to automatic activation of the method when the user communication device is in a specific territory.

The notice may be presented on the caller communication device as a vocalic notice, as a text message, or displayed on the communication device. As explained above, the user may select the notice from several options or to compose one or more as he or she wishes, for example: "If it is urgent press 1 and I will receive the call immediately, otherwise, please call me after 16:00"; "I am now in a movie until 21:00, if urgent, press 1 and I will answer"; "I am in a meeting, David or Ruth, press 1 and I will answer, all the others please call after 13:00"; "Trying to sleep early today, urgent matters press 1, otherwise please call me tomorrow". The method may also enables the user to determine in advance that the time period will be presented continuously in specific days and times.

The method that is described above, is the first embodiment of the method subject matter of the present patent application, and this first embodiment method may include a parallel communication between the callee communication device and the caller communication device: a direct communication of cellular connection, in case of a cellular voice call, or over the internet in case of a Skype, messenger, WhatsApp voice calls or any kind of communication service providers over internet, and an internet communication between these communication devices through the remote server as part of the operation of the method. By that, the execution of the first embodiment of the method does not require the cooperation of the communication service providers companies or mobile devices manufacturers.

The second embodiment of the method subject matter of the present patent application may be executed, for example, by manufacturers of communication devices such of mobile devices which may install the method as a built-in program in the processor devices in the mobile devices. The second embodiment of the method may be performed by a processing device (10) running on the communication device (200) of the user, and includes the following features:
(a) Enabling the user of a communication device (11) to manage incoming communication, such as voice calls, to his communication device by enabling the user to activate the method on his communication device for a period of time that he sets.
(b) In response to the activation of the method on the communication device, the method preventing the operation of the alerts mechanisms (3) of the communication device (11) during this period of time.
(c) Storing the information regarding this period of time in the processing device (10), possible of the communication device (11).
(d) In response to an incoming communication from another communication device (22) during said period of time, the method sends a notice to the another communication device that includes notification that the user prefers to receive now only urgent voice calls.
(e) Enabling the caller of said incoming communication whether to complete the incoming voice call according to his sole discretion.
(f) In response to a decision to complete this incoming voice call, the method enables the operation of the alerts mechanisms of the communication device and by that enabling the user of the communication device to be aware to this incoming communication that may be a voice call.

The third embodiment of the method subject matter of the present patent application can be executed, for example, by the communication service providers, such as telephone companies, cellular service providers, and other kind of communication service providers, which provides programs and services of communication such as voice calls over the internet, such as Skype, Viber, ahatsApp, Messenger, which may run the method on their computers. We will refer to all these kinds of communication service providers in the application and in the claims as "communication service providers". The third embodiment of the method which performed by processing device running on the computer (500) of the communication service provider, comprising:
(a) Enabling each subscriber of the communication service provider to manage incoming communication such as voice calls to his user number such as his phone number.
(b) Enabling the subscriber to establish a communication with said computer for activating the method regarding his user number for a period of time that he sets.
(c) In response to the activation, the method disabling for said period of time transmissions of incoming communication to the user number of this subscriber.
(d) Storing in the computer the information regarding the user number of the subscriber and listing for said period of time this user number as a user number on an urgent mode.
(e) Checking the incoming communication to subscribers of the communication service provider to find out whether one or more of these incoming communications are directed to this user number of this subscriber.
(f) In response to an incoming communication to this user number of the subscriber while said user number is listing as on urgent mode, the method sends a notice to the communication device (520) of the caller of this incoming communication that includes notification that this subscriber prefers to receive now only urgent communication.
(g) Enabling the caller whether to complete this incoming communication according to his sole discretion.
(h) In response to such decision of said caller to complete the incoming communication, the method enables transmission of this incoming communication to the user number of this subscriber and by that his communication device (510) may alerts.

### The method for managing incoming text messages:

This chapter is relevant to the method in regards to communications of text messages and also of vice calls. For the sake of fluency we will start with some definitions. The terms hereinafter have the meanings as stated beside each of them in this patent application and in the claims as well. These terms may be used in the application and the claims in plural or singular.

The term **"text message"** refers to text messages which may be executed also over cellular networks and messages over the internet by smartphone applications such as Viber, WhatsApp, FaceTime, Skype and Messenger;
The term **"sender communication device"** refers also to the communication device that performs an outgoing text message; The term **"recipient communication device"** refers also to the communication device that receives an incoming text message;

Additional object of the present patent application is to provide a method performed by processing devices (10) that enables users of communication devices to manage incoming communication such as incoming text messages. A smartphone application may be used as a framework for the overall operation of the method and for the sake of fluency we will use the terms "smartphone application" and "method" hereinafter in this connection and as having in general the same meanings. Users of communication devices can download the smartphone application to their communication devices. The smartphone application performs the method on the processing devices (10), which may be processing devices in the communication devices, in remote servers (100), on computers of service communication providers, or on part or all of them.
The method performed by processing devices (10) that may be running on communication devices (200) and remote server (100). The users of the communication devices (200) may perform a communication such as a text message and in these cases these users are senders and their communication devices are sender communication devices (2), or may receive a text message and in these cases these users are recipients and their communication devices are recipient communication devices (1). The method includes the following features:
(a) Enabling the user to activate the method regarding his communication device for a period of time that this user sets. In this case we may refer to this user as a recipient and to his communication device as a recipient communication device (1). The method enables the recipient to manage incoming communications such as of text messages to his recipient communication device (1) in a way that incoming communication will not activate the alerts mechanisms of his communication device but only after a decision of the sender that the text message or communication is urgent, a decision that is based on the sole discretion of the sender.
(b) In response to the activation of the method on the recipient communication device (1), the method prevents the operation of the alerts mechanisms (3) of the recipient communication device (1) in response to incoming communication such as text messages during this period of time that the recipient sets.
(c) In response to the activation of the method regarding the recipient communication device (1), the method sends to the server (100) via internet or via cellular network the information regarding the user number of the recipient communication device (1) and regarding the period of time that he sets.
(d) Storing in the server the information regarding the user number of the recipient communication device and listing for said period of time this user number as a user number on an urgent mode.
(e) in response to execution of a communication such as a text message from the sender communication device to another user number, the method sends via internet or via cellular network from the sender communication device (2) to the server (100) the information regarding the another user number.
(f) Checking in said remote server whether said another user number is listed in the remote server as a user number on an urgent mode.
(g) In response to a positive result of this checking, the method sends a notice to the sender communication device that includes notification that the recipient prefers to receive now only urgent communication.
(h) Enabling the sender of the communication whether to complete the communication according to his sole discretion.
(i) In response to such decision to complete the communication, the method sends command from the remote server to the recipient communication device (1) for enabling the operation of the alerts mechanisms (3) of the recipient communication device (1) and by that enabling the recipient to be aware to the incoming communication.
The method also may include the following feature: When the sender communication device does not include the method, then when this sender performs a communication to the recipient, the method sends to the sender communication device a message that the recipient using this method and recommends the sender to download it for enabling him to complete the text message, a future text message and also for his own use.
The term "completed" in this connection and also in the claims means that the alerts mechanisms (3) of the recipient communication device (1) will operate in response to the incoming communication, basically in the normal way when the method is on no-active mode, for example, ringing, vibrating and activating the screen with light and information regarding the incoming text message. In other words, the term "completed" means that the text message will be noticeable in real time, means immediately following sending the message as normally. The term "noticeable" in this connection means that the communication device of the user will alert in response to the incoming message and that the messaging application will present the message, basically in the normal way when the system is on no-active mode.

The notice informs the sender that the recipient prefers to receive now only urgent text message and this notice may include the time period that the recipient sets. As explained above, the method enables the sender to complete the communication such of a text message according to his own discretion, assuming that he will act according to the notice. For completing the text message the method may enables the sender to complete the text message by pressing on a specific button, on the screen or on the keyboard of his communication device, to say a specific word and any other way that users activates features by their communication devices. Otherwise, the sender may cancel the sending of the text message or to send it as non-urgent message, means that this text message will be transmitted and be noticeable on the communication device of the user at the end of said time period that the user sets. In other words, the method provides the sender with the option to complete the sending of the text message and it will be transmitted and noticeable immediately, to cancel the sending of the text message or to send it now with knowing that the text message will be noticeable in the communication device of the recipient at the end of that period of time. Important aspect of the method is that the user is not aware of and is not distracted when a message has been sent to him and waiting to be shown at his communication device at the end of said period of time.
The method may provide the users with an option to select the notice out of several optional notices. The method may also provide the users an option to compose a notice. The notice may include the time period in which the recipient prefers to receive only text message in specific matters.

The method enables the recipient to define times in which he wishes to receive only urgent text message. The method also may include the option to define geographical locations in which the recipient will receive only urgent text message, by using the GPS features and the map programs of the mobile device. The recipient may set the method that it will be activated automatically anytime he is in a certain territory, for example, in the school yard of his children, in the park, in the sport club, the church and other places in which the recipient prefer to be in a rest from not-urgent text message. The term "a period of time" in the claims also refers to automatic activation of the method when the user communication device is in a specific territory.

The notice may be presented on the sender communication device as a vocalic notice, as a text message, or displayed on the mobile device. As explained above, the user may select the notice from several options or to compose one or more as he or she wishes, for example: "If it is urgent press 1 and I will receive the text message immediately, otherwise, please text to me after 16:00"; "I am now in a movie until 21:00, if urgent, press 1 and I will receive now the text message"; "I am in a meeting, David or Ruth, press 1 and I will receive now the text messages, all the others please text to me after 13:00"; "Trying to sleep early today, urgent matters press 1, otherwise please try tomorrow". The method may also enable the user to determine in advance that the time period will be presented continuously in specific days and times.

In other words, the notification includes the time frame and the smartphone application may provide the user with an option to select a notification out of several optional notifications and also the option to compose the notification by adding some information, as a text or symbols for example, that will be presented before the senders as to the matters, type of senders or specific senders that are requested or permitted to send their messages immediately as urgent messages. For example, the user can compose the following notification: "Your message will be noticeable for me only today at 16:00; If your message is not urgent then press "send" and I will notice it at 16:00; if your message is urgent then press "urgent" and your message will be noticeable immediately; Any message regarding the school of my son, from my clients and from David or Sara - please send as "urgent". We may assume that senders will act according the notification.

The smartphone application may be also useful in time of driving or having personal or business meetings. It is known that the average user is unlikely to close the messaging applications in time of driving, due to unreasonable fear that he may miss important messages. In these cases, the user may psychologically allow himself to activate the smartphone application and to set the time frame according the anticipating time of the meeting or the driving. Many users unfortunately permit themselves to look at the mobile devices during driving when they hear the alert of incoming messages, which distract their mind and increase the risk of driving. In such cases, for example, before starting a driving for 2 hours between 10:00 to 12:00, the user may set the time frame as "after 12:00" and thus it is likely that he will receives fewer amounts of messages during driving for his safety.

The method that is described above, is the first embodiment of the method subject matter of the present patent application, and this first embodiment method includes in fact a parallel communication between the recipient mobile device and the sender mobile device: the direct communication of the cellular connection, in case of a cellular text message, or over the internet in case of a Skype, messenger, WhatsApp text messages or other kind of phone service provider over internet, and the internet communication between these mobile devices through the remote server as part of the operation of the method. By that, the execution of the first embodiment of the method does not require the cooperation of the phone service providers companies or the mobile devices manufacturers. The term "phone service providers" means any provider that provides services of text messaging, including cellular providers, Skype, Messenger, Viber, WhatsApp providers and the like.

The second embodiment of the method subject matter of the present patent application may be executed, for example, by the manufacturers of mobile devices which may install the method as a built-in program in the processor devices in the mobile devices. The second embodiment of the method performed by a processing device (10) running on the mobile device (200) of the user, and includes the following features:
(a) Enabling the user of a mobile device (11) to manage incoming text messages to his mobile device by enabling the user to activate the method on his mobile device for a period of time that he sets.
(b) In response to the activation of the method on the mobile device, the method prevents the operation of the alerts mechanisms (3) of the mobile device (11) in response to incoming text messages during this period of time.
(c) Storing the information regarding this period of time in the processing device (10) in the mobile device (11).
(d) In response to an incoming text message from another mobile device (22) during said period of time, the method sends a notice to the another mobile device that includes notification that the user prefers to receive now only urgent text message.
(e) Enabling the sender of said incoming text message whether to complete the incoming text message according to his sole discretion.
(f) In response to a decision to complete this incoming text message, the method enables the operation of the alerts mechanisms of the mobile device and by that enabling the user of the mobile device to be aware to this incoming text message.
The third embodiment of the method subject matter of the present patent application can be executed, for example, by the phone service providers, such as telephone companies, cellular service providers, and other kind of phone service providers, which provides programs and services for text messages over the internet, such as Skype, Viber, ahatsApp, Messenger, which may run the method on their computers. We will refer to all these kinds of text messages service providers in the application and in the claims as "phone service providers". The third embodiment of the method which performed by processing device running on the computer (500) of the phone service provider, comprising:
(a) Enabling each subscriber of the phone service provider to manage incoming text message to his phone number.
(b) Enabling the subscriber to establish a communication with said computer for activating the method regarding his phone number for a period of time that he sets.
(c) In response to the activation, the method disables for said period of time transmissions of incoming text message to the phone number of this subscriber.
(d) Storing in the computer the information regarding the phone number of the subscriber and listing for said period of time this phone number as a phone number on an urgent mode.
(e) Checking the incoming text message to subscribers of the phone service provider to find out whether one or more of these incoming text messages are directed to this phone number of this subscriber.
(f) In response to an incoming text message to this phone number of the subscriber while said phone number is listing as on urgent mode, the method sends a notice to the mobile device (520) of the sender of this incoming text message that includes notification that this subscriber prefers to receive now only urgent text messages.
(g) Enabling the sender whether to complete this incoming text message according to his sole discretion.
(h) In response to such decision of said sender to complete the incoming text message, the method enables transmission of this incoming text message to the phone number of this subscriber and by that a mobile device (510) of the subscriber may alerts.

We can summaries three methods and three systems in connection with incoming communications, either voice calls or text messages, for aspects of the methods and systems embodiments as follows:
First Method: A method performed by a processing device for managing incoming communications to a communication device that comprises:
   (a) enabling a user of said communication device to manage said incoming communications by enabling said user to activate the method regarding said communication device for a period of time that said user sets;
   (b) in response to said activation of the method regarding said communication device, preventing operation of alerts mechanisms of said communication device in response to said incoming communications for said period of time;
   (c) storing information regarding said period of time in said processing device;
   (d) in response to execution of incoming communication to said communication device from another communication device during said period of time, sending a notice to said another communication device, said notice includes notification that said user prefers to receive now only urgent incoming communications;
   (e) enabling an initiator of said incoming communication to complete said incoming communication according to said initiator sole discretion;
   (f) in response to completion of said incoming communication, enabling immediate operation of said alerts mechanisms of said communication device in response to said incoming communication, whereby enabling said user of said communication device to be aware of said incoming communication;
   (g) whereby enabling said user to manage said incoming communications to said communication device in a way that said incoming communication will immediately activate said alerts mechanisms of said communication device only as a result of said completion of said incoming communication by said initiator of said incoming communication and according to said initiator sole discretion.
Second Method: The method performed by a processing device for managing incoming communications to a communication device as stated above (the First Method) that further comprises:
   (a) in response to said activation of the method regarding said communication device, sending to a remote server information regarding a user number of said communication device and regarding said period of time;
   (b) storing in said remote server said information regarding said user number of said communication device and listing for said period of time said user number as a user number on an urgent mode;
   (c) in response to execution of incoming communication by said another communication device to a specific targeted user number, sending to said server information regarding said specific targeted user number of said incoming communication;
   (d) checking in said server whether said specific targeted user number is listed in said server as said user number on an urgent mode;
   (e) in response to a positive result of said checking, sending said notice to said another communication device;
   (f) in response to said completion of said incoming communication, sending command from said server to said communication device for said enabling said immediate operation of said alerts mechanisms of said communication device.
Third Method: The method performed by a processing device for managing incoming communications to a communication device as stated above (the First Method) that further comprises:
   (a) in response to said activation of the method regarding said communication device, storing in a computer of a communication service provider information regarding a user number of said communication device and regarding said period of time, and listing for said period of time said user number as a user number on an urgent mode;
   (b) disabling for said period of time transmissions of said incoming communications to said user number of said communication device;
   (c) checking incoming communications to subscribers of said communication service provider to find out whether one or more of said incoming communications are directed to said user number on said urgent mode;
   (d) in response to incoming communication to said user number while is listing as on said urgent mode, sending said notice to said another communication device;
   (e) in response to said completion of said incoming communication, enabling immediate transmission of said incoming communication to said user number of said communication device.
First system: A system comprising a processing device for managing incoming communications to a communication device for carrying out the steps of the method that is stated above as the First Method.
Second system: A system comprising a processing device for managing incoming communications to a communication device for carrying out the steps of the method that is stated above as the Second Method.
Third system: A system comprising a processing device for managing incoming communications to a communication device for carrying out the steps of the method that is stated above as the Third Method.

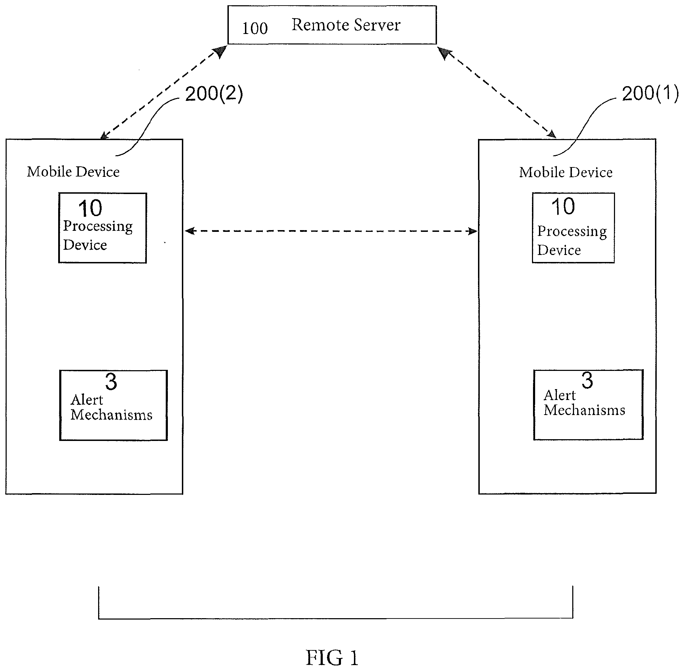

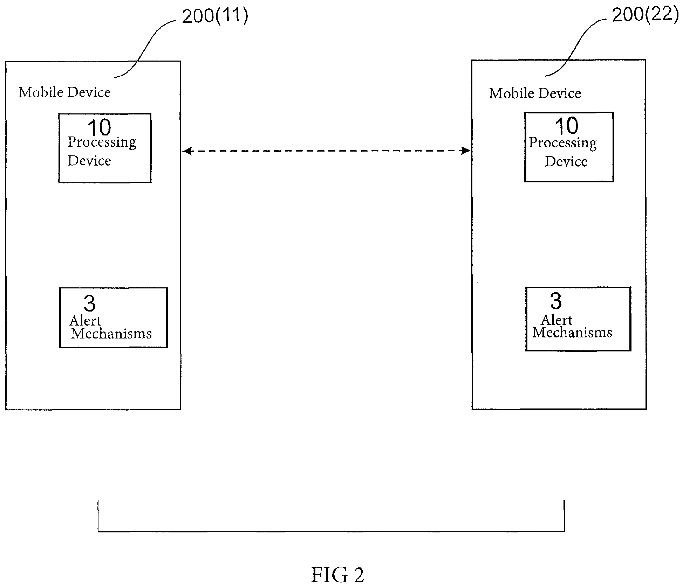

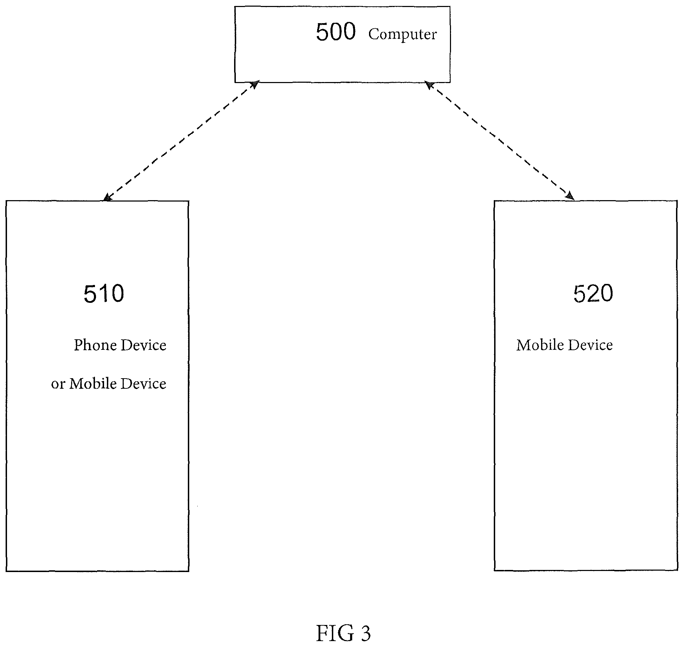

FIG. 1 is a block diagram that shows two communication devices (200) that one of them is the callee or recipient communication device (1) and the second one is the caller or sender communication device (2). The dotted lines between the server (100) and the communication devices (200) refer to internet communication and the dotted line between these two communication devices (1) and (2) refer to a cellular communication in case of a cellular communication. FIG. 2 is a block diagram that shows two communication devices (200) that one of them is the communication device (11) and the second one is the another communication device (22). FIG. 3 is a block diagram that shows the computer (500) of the communication service provider, the communication device (520) and the another communication device (510).

It is clear from the above explanations that when the incoming communication is an incoming voice call then the methods and the systems enable the recipient to manage incoming voice calls to his communication device in a way that the incoming voice calls will not activate the alerts mechanisms of the recipient communication device but only as a result of completion of the incoming voice call. It is also clear that when the incoming communication is an incoming text message then the methods and the systems enable the recipient to manage incoming text messages to his communication device in a way that the incoming text messages will not immediately activate the alerts mechanisms of his communication device but only as a result of the completion of said text message.

Prior art discloses methods that enable a telephone subscriber to block totally incoming calls for certain period of time, to choose a group of restricted telephone numbers, means, to receive incoming calls from anyone but not from that list, or to choose a group of permitted telephone numbers, means, to receive incoming calls from that list but not from anyone else, and he may also create a list of priority telephone numbers. The prior art does not include sending a notification that the user prefers to receive now only urgent incoming communications. The prior art does not include the feature that enables a caller to complete the voice call or the text message and also not according to his sole discretion. The prior art does not include the feature that in response to completion of the voice call or the text message enabling immediate operation of the alerts mechanisms of the communication device in response to said incoming communication and enabling the user of the communication device to be aware of the incoming communication. No prior art discloses the option of providing the caller with an option to complete the voice call or the text message according to his own discretion. The methods and systems subject matter of the present patent application enables a user to mute his phone and to hear the rings only of urgent calls and urgent text messages according the decision of the callers and senders that may estimate the urgency degree of their calls and messages relatively with the notification content that they received from the user.

## Claims

1. A method performed by a processing device for managing incoming communications to a communication device, comprising:
enabling a user of said communication device to manage said incoming communications by enabling said user to activate the method regarding said communication device for a period of time that said user sets;
in response to said activation of the method regarding said communication device, preventing operation of alerts mechanisms of said communication device in response to said incoming communications for said period of time;
storing information regarding said period of time in said processing device;
in response to execution of incoming communication to said communication device from another communication device during said period of time, sending a notice to said another communication device, said notice includes notification that said user prefers to receive now only urgent incoming communications;
enabling an initiator of said incoming communication to complete said incoming communication according to said initiator sole discretion;
in response to completion of said incoming communication, enabling immediate operation of said alerts mechanisms of said communication device in response to said incoming communication, whereby enabling said user of said communication device to be aware of said incoming communication;
whereby enabling said user to manage said incoming communications to said communication device in a way that said incoming communication will immediately activate said alerts mechanisms of said communication device only as a result of said completion of said incoming communication by said initiator of said incoming communication and according to said initiator sole discretion.

2. The method performed by a processing device for managing incoming communications to a communication device according to claim 1, further comprises:
in response to said activation of the method regarding said communication device, sending to a remote server information regarding a user number of said communication device and regarding said period of time;
storing in said remote server said information regarding said user number of said communication device and listing for said period of time said user number as a user number on an urgent mode;
in response to execution of incoming communication by said another communication device to a specific targeted user number, sending to said server information regarding said specific targeted user number of said incoming communication;
checking in said server whether said specific targeted user number is listed in said server as said user number on an urgent mode;
in response to a positive result of said checking, sending said notice to said another communication device;
in response to said completion of said incoming communication, sending command from said server to said communication device for said enabling said immediate operation of said alerts mechanisms of said communication device.

3. The method performed by a processing device for managing incoming communications to a communication device according to claim 1, further comprises:
in response to said activation of the method regarding said communication device, storing in a computer of a communication service provider information regarding a user number of said communication device and regarding said period of time, and listing for said period of time said user number as a user number on an urgent mode;
disabling for said period of time transmissions of said incoming communications to said user number of said communication device;
checking incoming communications to subscribers of said communication service provider to find out whether one or more of said incoming communications are directed to said user number on said urgent mode;
in response to incoming communication to said user number while is listing as on said urgent mode, sending said notice to said another communication device;
in response to said completion of said incoming communication, enabling immediate transmission of said incoming communication to said user number of said communication device.

4. A system comprising a processing device for managing incoming communications to a communication device for carrying out the steps of the method of claim 1.

5. A system comprising a processing device for managing incoming communications to a communication device for carrying out the steps of the method of claim 2.

6. A system comprising a processing device for managing incoming communications to a communication device for carrying out the steps of the method of claim 3.
